# EUROPÄISCHE PATENTSCHRIFT

(11) **EP 0 657 093 B1**
(45) Veröffentlichungstag und Bekanntmachung des Hinweises auf die Patenterteilung: **21.01.1998**
(21) Anmeldenummer: 94118745.2
(22) Anmeldetag: 29.11.1994
(51) Int. Cl.: A01C 7/04

(54) **Säorgan**
Seeder element
Elément de semoir

(30) Priorität: 13.12.1993 US 166753
(43) Veröffentlichungstag der Anmeldung: 14.06.1995
(73) Patentinhaber: DEERE & COMPANY, Moline, Illinois 61265 (US)
(72) Erfinder: Schick, Jeffrey Carl, Davenport, Iowa 52807 (US); Lodico, James Irwin, Hampton, Illinois 61256 (US)
(74) Vertreter: Feldmann, Bernhard

(56) Entgegenhaltungen:
- DE-A- 2 011 462
- FR-A- 2 199 250
- FR-A- 2 368 872
- FR-A- 2 663 497
- US-A- 3 552 601
- US-A- 3 670 671
- US-A- 4 282 985
- US-A- 5 027 725

## Beschreibung

Die Erfindung bezieht sich auf ein Säorgan mit einer Saatgutaufnahmezone, einer Saatguthaltezone, einer Saatgutabgabezone und mit um eine Drehachse umlaufenden Auswahlfingern, die in Längsrichtung derart zwangsverstellbar ausgebildet sind, daß sie in der Aufnahmezone die Aufnahme eines einzelnen Saatkorns bewirken, in der Haltezone das aufgenommene Saatkorn halten und in der Abgabezone das Austreten des Saatkorns in einen Auslaß bewirken.

Derartige Säorgane finden insbesondere bei sogenannten in der Landwirtschaft einsetzbaren Einzelkornsämaschinen Verwendung, mit denen einzelne Saatgutkörner in gleichen Abständen in einer in den Ackerboden gezogenen Saatrille abgelegt werden. Ein Saatbehälter füllt das Säorgan im Bereich der Aufnahmezone mit Saatgut, wo ein einzelnes Saatkorn erfaßt und durch geeignete Mittel, die eine Doppel- oder Vielfachbelegung verhindern sollen, bis zur Abgabezone transportiert wird. In der Abgabezone wird das Saatkorn wieder freigegeben, so daß es beispielsweise durch ein an den Auslaß des Säorgans sich anschließendes Fallrohr in die Saatrille gelangen kann.

Der Markt bietet eine Vielzahl von Einzelkornsämaschinen an, wobei die Doppel- oder Vielfachbelegung mechanisch oder pneumatisch vermieden werden soll und das Säorgan Zellenräder oder Klemmfinger aufweist.

Das Dokument US-A-4 282 985 offenbart ein Säorgan mit Zellenrad. Eine in einem Gehäuse umlaufende Säscheibe ist an ihrem Umfang mit Saatgutzellen versehen, die bei richtig gewählter Größe jeweils ein Saatkorn aufnehmen sollen. Die Säscheibe läuft in dem Gehäuse um und gibt im Bereich der Abgabezone das Saatgut frei.

Das Dokument US-A-3 552 601 offenbart ein Säorgan mit umlaufenden Klemmfingern. Die Klemmfinger sind mit Bezug auf die Drehachse radial angeordnet und um ihre Längsachse drehbar. In der Aufnahmezone wird ein vom Finger abstehender Greifteil zum Erfassen eines Korns von einer stationären Platte fortgeschwenkt, um danach wieder an der Platte zur Anlage zu kommen. In der Abgabezone wird der Greifteil wieder von der Platte fortgeschwenkt.

Bei dem eingangs berücksichtigten Säorgan (US-A-3 670 671) läuft in einem C-förmig ausgebildeten Gehäuse ein aus zwei Ringplatten gebildeter Rotor um, in dessen Peripherie radiale Öffnungen zur Aufnahme von unter Federwirkung stehender Klemmfinger eingearbeitet sind. Die Klemmfinger sind an ihrem einen Ende mit winklig angeordneten und tassenförmig ausgebildeten Greifteilen versehen, werden über die Federn in Richtung auf die Mantelfläche des Gehäuses gedrückt und müssen gegen Herausfallen aus den Öffnungen gesichert werden. Die C-Form des Gehäuses bzw. der Mantelfläche bewirkt, daß in der Aufnahmezone die Greifteile erst allmählich in die Radialöffnungen zurückgedrückt werden. In der Haltezone sind die Finger ganz oder weiter in die Öffnungen zurückgedrückt und sollen zwischen den Greifteilen und der stillstehenden Mantelfläche jeweils ein Korn halten, das an der Mantelfläche vorbeischleift und in der Abgabezone wieder freigegeben wird, da dort die Finger nicht mehr gegen die Mantelfläche anliegen können. Die Finger werden damit durch die Formgebung der Gehäusemantelfläche gesteuert, wobei es offen bleibt, wie sie in der oberen Haltezone ein Saatkorn sicher halten können. Die radiale Anordnung der Finger erfordert einen nicht einfach herzustellenden und damit aufwendigen und teuren Rotor.

Die der Erfindung zugrunde liegende Aufgabe wird daher in einem einfach herzustellenden und damit kostengünstigen Säorgan gesehen, daß nach weiteren Aspekten der Erfindung ein einzelnes Saatkorn - auch unterschiedlicher Größe - sicher und ohne Beschädigungen zu der Abgabezone transportieren kann. Die Erfindung sieht deshalb zunächst vor, daß die Längsachsen der Auswahlfinger koaxial zu ihrer Drehachse angeordnet sind.

Damit das Saatkorn bei seinem Transport nicht an einem feststehenden Gehäuseteil vorbeischleift, wodurch es einer an sich unerwünschten Reibung und einer eventuellen Beschädigung ausgesetzt wäre, sieht die Erfindung bei einem Säorgan mit einem die Auswahlfinger aufnehmenden Scheibenteil ferner vor, daß mit Abstand zu dem Scheibenteil eine zusammen mit dem Scheibenteil umlaufende Scheibe vorgesehen ist und daß die Auswahlfinger derart zwangsgesteuert sind, daß sie während ihres Umlaufs auf die Scheibe zu und von ihr fort bewegbar sind. Damit können die Finger zwischen sich und der umlaufenden Scheibe in einfacher Weise ein Saatkorn einklemmen, wobei die Aufnahme und die Abgabe durch die Steuerung bewirkt wird. Wenn außerdem die Scheibe noch mit Saatzellen versehen ist, die zu den Auswahlfingern ausgerichtet sind, kann jede Saatzelle, die zweckmäßig als Sackloch ausgebildet ist, im Aufnahmebereich ein Saatkorn leicht aufnehmen, das dann durch den Finger gesichert bzw. gehalten wird. Die Saatkörner können auch eine unterschiedliche Größe aufweisen, da nach einem weiteren Aspekt der Erfindung, jede Saatzelle durch eine flexible und nachgiebige Membrane abgedeckt sein kann, die sich durch die Wirkung der gesteuerten Finger in die Saatzelle legt und sich der Größe des Saatkorns anpaßt.

Die Zwangssteuerung der Finger kann an sich durch eine Kulisse erfolgen. Bevorzugt wird allerdings nach der Erfindung, daß die Auswahlfinger an ihren der Scheibe abgelegenen Enden gegen eine stillstehende Nockenfläche unter Federwirkung zur Anlage bringbar sind, was erheblich einfacher ist als eine Kulissensteuerung. Wenn das Säorgan ein aus wenigstens einer Mantelfläche und einer Seitenfläche bestehendes Gehäuse aufweist, bietet sich die Seitenfläche des Gehäuses zur Anbringung der Nockenfläche an, die dann in der Gutaufnahmezone rampenförmig ansteigend und in der Gutabgabezone rampenförmig absteigend ausgebildet sein kann. Auf diese Weise wird dann jeder Finger in der Aufnahmezone auf die umlaufende Scheibe allmählich zugedrückt und kann sich in der Abgabezone wieder von dieser entfernen. In der Haltezone ändert der Finger seine Lage mit Bezug auf die umlaufende Scheibe nicht mehr.

Bei dem aus wenigstens einer Mantelfläche und einer Seitenfläche bestehenden Gehäuse des Säorgans ist ferner vorgesehen, daß der Scheibenteil und die Scheibe parallel zueinander angeordnet und auf einer Antriebswelle drehfest angeordnet sind, wobei der Scheibenteil zu der Seitenfläche des Gehäuses Abstand aufweist und gegen eine Ringschulter in der Mantelfläche anliegt und wobei die Scheibe gegen das der Seitenfläche des Gehäuses abgelegene Ende der Mantelfläche anliegt. Die umlaufende Scheibe kann somit das Gehäuse schließen, so daß eine weitere feststehende Gehäusewand grundsätzlich nicht erforderlich ist.

Zu einem leichten Festhalten eines Saatkorns wird schließlich vorgeschlagen, daß jeder Auswahlfinger an seinem der Scheibe zugelegenen Ende tassenförmig ausgebildet ist. Damit ergibt sich ein äußerer Rand, der gegen das Saatkorn anliegt, so daß das Korn zwischen Saatzelle und Finger sicher gehalten bzw. geklemmt ist.

Federn sind so angeordnet, daß sie den jeweiligen Finger von der umlaufenden Scheibe fortdrücken wollen, weshalb zu diesem Zweck vorgesehen sein kann, daß jeder Auswahlfinger an seinem der Seitenfläche des Gehäuses zugelegenen Ende mit einer Anschlagfläche versehen ist, gegen die eine Feder einenends anliegt, die anderenends gegen den Scheibenteil anliegt.

Schließlich können die Auswahlfinger und die Saatzellen auf Kreisen mit gleichem Durchmesser angeordnet sein, wobei jedem Auswahlfinger eine Saatzelle zugeordnet ist. Die Membrane kann dabei einstückig ausgebildet werden.

In der Zeichnung ist ein nachfolgend näher erläutertes Ausführungsbeispiel der Erfindung dargestellt. Es zeigt:
- Fig. 1: ein Säorgan in Seitenansicht,
- Fig. 2: einen Schnitt nach der Linie 2 : 2 in Fig. 1 und
- Fig. 3: einen ein Saatkorn in einer Saatzelle haltenden Auswahlfinger.

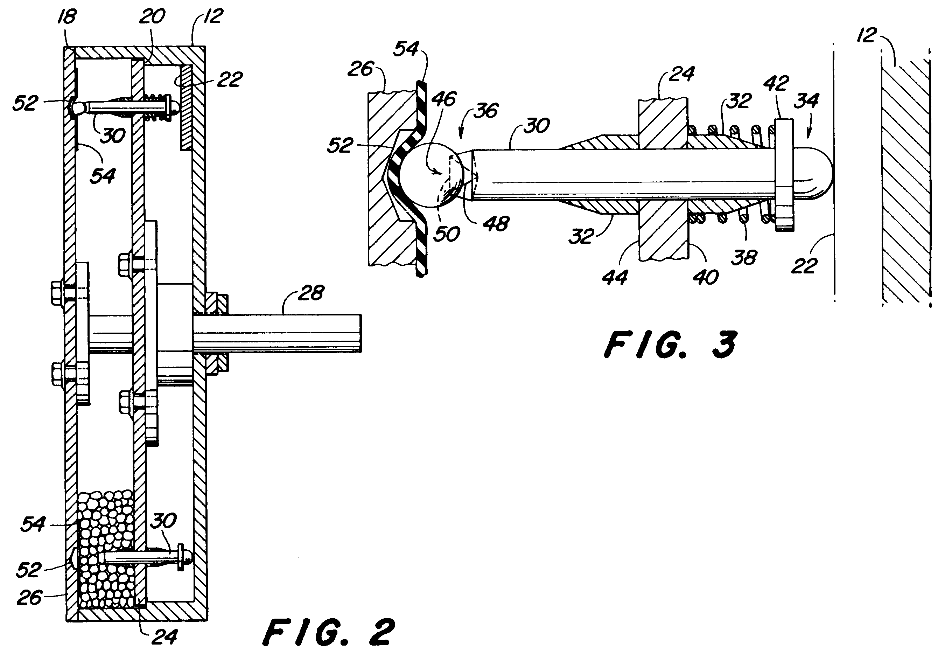

Ein Säorgan 10 zur Saatgutdosierung ist mit einem stillstehenden Gehäuse 12 versehen, das einen Einlaß 14 und einen Auslaß 16 aufweist. Das Gehäuse 12 ist an einer Seite offen und seine Mantelfläche oder ringförmige Felge ist mit 18 bezeichnet. Aus Fig. 2 ist noch erkennbar, daß in die Innenseite der Mantelfläche 18 eine Ringschulter 20 eingearbeitet ist. Außerdem ist die Seitenfläche des Gehäuses 12 noch mit einer Nockenfläche 22 bestückt.

In dem Gehäuse 12 sind ein Scheibenteil 24 und mit Abstand zu diesem eine Scheibe 26 mit einer Antriebswelle 28 drehfest verbunden. Scheibenteil 24 und Scheibe 26 können damit in dem Gehäuse 12 gemeinsam umlaufen. Der Scheibenteil 24 nimmt auf einem Kreisbogen eine Vielzahl von Auswahlfingern 30 oder Klemmfingern auf, deren Längsachsen parallel zu der Antriebswelle 28 angeordnet sind. Insbesondere aus Fig. 3 ist zu ersehen, daß jeder Auswahlfinger 30 in einem Führungsrohr 32 geführt ist, das seinerseits mit dem Scheibenteil 24 verbunden ist. Das Führungsrohr 32 kann einstückig oder so, wie in Fig. 3 gezeigt, ausgebildet sein. Das der Nockenfläche 22 zugelegene Ende eines jeden Auswahlfingers 30 ist mit 34 und das der Scheibe 26 zugelegene Ende ist mit 36 bezeichnet. Das Ende 34 ist halbkugelförmig gestaltet und liegt im Bereich der Nockenfläche 22 gegen diese an. Hierzu ist eine Feder 38 vorgesehen, die einenends gegen die der Nockenfläche 22 zugelegene Seite 40 des Scheibenteils 24 und anderenends gegen einen als Flansch ausgebildeten Anschlagteil 42 anliegt, der mit dem Auswahlfinger 30 verbunden ist. Jeder Auswahlfinger 30 ist durch den Scheibenteil 24, dessen der Scheibe 26 zugelegene Seite mit 44 bezeichnet ist, geführt und erstreckt sich in Richtung des Scheibenteils. Das diesem zugelegene Ende 36 des Auswahlfingers 30 ist als eine Greiffläche 46 ausgebildet, die durch eine konische Aufbohrung 48 gebildet ist. Hierdurch entsteht ein ringförmiger Felgenkranz 50, der zum Mitnehmen bzw. Erfassen eines einzelnen Saatkorns dient. Der Auswahlfinger 30 kann an seinem Ende 36 außerdem noch abgeschrägt ausgebildet sein.

Die Scheibe 26 ist parallel zu dem Scheibenteil 24 angeordnet und auf einem Kreisbogen mit einer Vielzahl von Saatzellen 52 versehen, die zu den Auswahlfingern 30 ausgerichtet sind und deren Anzahl der Anzahl der Auswahlfinger 30 entspricht. Außerdem sind die Saatzellen 52 durch Membranen 54 abgedeckt. Jeder Zelle kann eine einzelne Membrane oder allen Zellen eine einzige umlaufende Membrane zugeordnet sein. Jedenfalls ist die umlaufende Membrane oder sind die einzelnen Membranen flexibel und nachgiebig, damit sie sich den einzelnen Saatkörnergrößen anpassen können. Auf diese Weise können unterschiedlich große Saatkörner dosiert werden, und ein Auswechseln der Scheibe 26 bei einem Wechsel auf anderes Saatgut ist nicht unbedingt erforderlich.

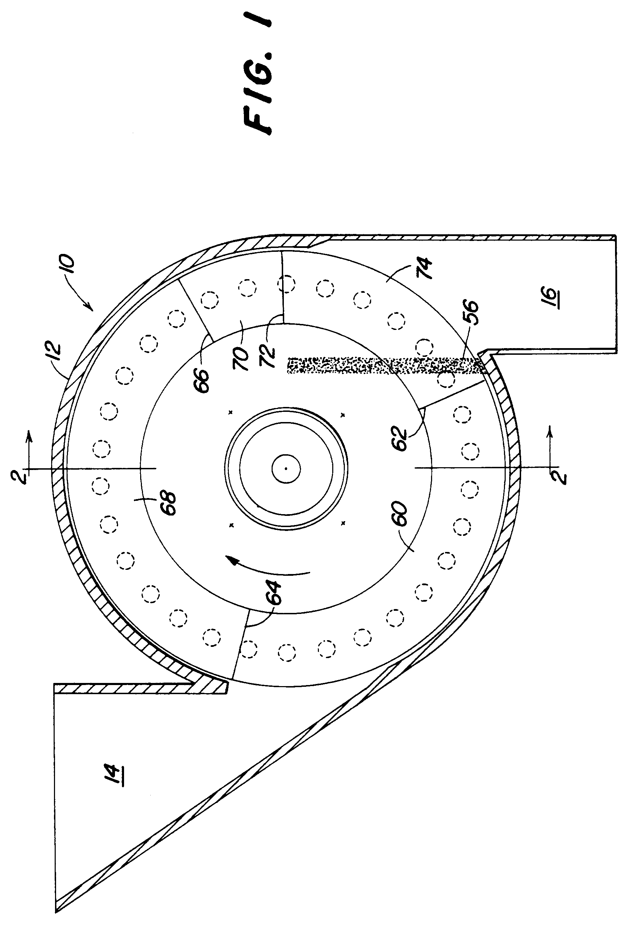

Im zusammengebauten Zustand gleitet der Scheibenteil 24 mit seiner äußeren Eckkante an der Ringschulter 20 des Gehäuses 12 und die Scheibe 26 gleitet mit ihrer äußersten Innenseite an der offenen Seite der Mantelfläche 18 des Gehäuses. Somit entsteht zwischen dem Scheibenteil 24 und der Scheibe 26 ein geschlossener Raum, der durch den Einlaß 14 mit Saatgut beschickt wird. Saatgut sammelt sich dadurch im unteren Bereich des Gehäuses 12 zwischen dem Scheibenteil 24 und der Scheibe 26 in einer Gutaufnahmezone an, wie es aus Fig. 2 erkennbar ist. Eine Dichtbürste 56 ist noch zwischen dem Scheibenteil 24 und der Scheibe 26 vorgesehen. Sie verhindert den direkten Durchtritt von Saatgut aus der Gutaufnahmezone zum Auslaß 16 bzw. in die Gutabgabezone und erlaubt infolge ihrer quer angeordneten Borsten den Durchtritt der Auswahlfinger 30 bei ihrem Umlauf von der Austrittszone in die Eingangszone. Die Umlaufrichtung der Auswahlfinger 30 erfolgt mit Bezug auf Fig. 1 im Uhrzeigerdrehsinn gemäß Pfeilrichtung. Aus Fig. 1 ist außerdem erkennbar, daß die Dichtbürste 56 mit dem Gehäuse 12 bzw. dessen Mantelfläche 18 verbunden ist und sich von dieser aus gesehen nach oben erstreckt.

Die Nockenfläche 22 ist mit einer ansteigenden Rampe 60 versehen, die zwischen den Linien 62 und 64 gebildet ist. Wenn nun ein Auswahlfinger 30 durch das sich in der Aufnahmezone befindliche Saatgut hindurchtritt, wird die Rampe 60 den entsprechenden Finger in Richtung auf die zugehörige membranabgedeckte Saatzelle 52 entgegen der Wirkung der Feder 38 drücken, bis ein einzelnes Saatkorn durch den Finger 30 in der Saatzelle 52 festgehalten wird. In dem Bereich zwischen den Linien 64 und 66 - der Haltezone 68 - hat die Nockenfläche 22 eine einheitliche Stärke, und in dieser Haltezone wird in jeder Saatzelle 52 ein einzelnes Saatkorn durch den zugehörigen Finger 30 gehalten. An die Linie 66 schließt sich eine abfallende Rampe 70 an, die bei der Linie 72 das Niveau der Seitenwand des Gehäuses 12 erreicht. Infolge der Federn 38 werden in diesem Bereich die Finger 30 noch gegen die abfallende Rampe 70 gedrückt, wodurch sie sich allmählich von den Saatzellen entfernen und das Saatkorn schließlich wieder freigeben. Dieses kann dann in der Abgabezone 74, die zwischen den Linien 72 und 62 liegt und in der die Finger 30 über die Federn 38 von der Scheibe 26 fortgezogen wurden, in den zugehörigen Auslaß 16 fallen.

Wenn der Scheibenteil 24 und die Scheibe 26 von der Abgabezone in die Aufnahmezone gedreht werden, sind also die sich in diesem Bereich befindlichen Auswahlfinger von den zugehörigen Saatzellen fortgezogen. Saatgut gleitet zwischen den Fingern und den Saatzellen, wenn die Scheibe 26 und der Scheibenteil 26 durch den Aufnahmebereich gedreht werden. In diesem Bereich werden aber die Finger allmählich durch die ansteigende Rampe 60 in Richtung auf die Saatzellen 52 verschoben, so daß sie schließlich ein einzelnes Saatkorn in der zugehörigen Saatzelle festhalten können. Die Membrane paßt sich dabei der jeweiligen Saatgutgröße an. Ein einzelnes Saatkorn wird dann solange festgehalten, bis daß die Abgabezone erreicht ist, wo das Saatkorn wieder freigegeben wird.

Im Rahmen der Erfindung kann die beim bevorzugten Ausführungsbeispiel umlaufende Scheibe 26 auch stationär sein. Die Auswahlfinger müssen nicht unbedingt durch einen Nocken gesteuert werden. Sie können auch in einer Kulisse geführt sein, durch die die Hin- und Herbewegung der Finger gesteuert wird. Auf eine Feder kann in einem solchen Fall verzichtet werden. Andererseits ist es auch durchaus möglich und in manchen Anwendungsfällen auch angebracht, daß die Finger unter Federwirkung auf die Saatzellen zubewegt werden. Die Finger entwickeln dann eine stärkere Klemmwirkung. Bei einer solchen Ausbildung ist dann die Nockenfläche derart auszubilden und anzuordnen, daß sie die Finger von den Saatzellen im Bereich der abfallenden Rampe bzw. im Abgabebereich wegzieht bzw. fortdrückt, um in diesem Bereich das entsprechende Saatkorn freigeben zu können.

## Patentansprüche

1. Säorgan (10) mit einer Saatgutaufnahmezone, einer Saatguthaltezone (68), einer Saatgutabgabezone (74) und mit um eine Drehachse umlaufenden Auswahlfingern (30), die in Längsrichtung derart zwangsverstellbar ausgebildet sind, daß sie in der Aufnahmezone die Aufnahme eines einzelnen Saatkorns bewirken, in der Haltezone (68) das aufgenommene Saatkorn halten und in der Abgabezone das Austreten des Saatkorns in einen Auslaß (16) bewirken, dadurch gekennzeichnet, daß die Längsachsen der Auswahlfinger (30) koaxial zu ihrer Drehachse angeordnet sind.

2. Säorgan nach Anspruch 1 mit einem die Auswahlfinger (30) aufnehmenden Scheibenteil (24), dadurch gekennzeichnet, daß mit Abstand zu dem Scheibenteil (24) eine zusammen mit dem Scheibenteil (24) umlaufende Scheibe (26) vorgesehen ist und daß die Auswahlfinger (30) derart zwangsgesteuert sind, daß sie während ihres Umlaufs auf die Scheibe (26) zu und von ihr fort bewegbar sind.

3. Säorgan nach Anspruch 2, dadurch gekennzeichnet, daß die Scheibe (26) mit Saatzellen (52) versehen ist, die zu den Auswahlfingern (30) ausgerichtet sind.

4. Säorgan nach Anspruch 3, dadurch gekennzeichnet, daß jede Saatzelle (52) durch eine flexible und nachgiebige Membrane (54) abgedeckt ist.

5. Säorgan nach einem oder mehreren der vorherigen Ansprüche, dadurch gekennzeichnet, daß die Auswahlfinger (30) an ihren der Scheibe (26) abgelegenen Enden (34) gegen eine stillstehende Nockenfläche (22) unter Federwirkung zur Anlage bringbar sind.

6. Säorgan nach Anspruch 5 mit einem aus wenigstens einer Mantelfläche (18) und einer Seitenfläche bestehenden Gehäuse (12), dadurch gekennzeichnet, daß die Nockenfläche (22) an der Seitenfläche des Gehäuses (12) vorgesehen und in der Gutaufnahmezone rampenförmig ansteigend und in der Gutabgabezone (74) rampenförmig absteigend ausgebildet ist.

7. Säorgan nach einem oder mehreren der vorherigen Ansprüche mit einem aus wenigstens einer Mantelfläche (18) und einer Seitenfläche bestehenden Gehäuse (12), dadurch gekennzeichnet, daß der Scheibenteil (24) und die Scheibe (26) parallel zueinander angeordnet und auf einer Antriebswelle (28) drehfest angeordnet sind, wobei der Scheibenteil (24) zu der Seitenfläche des Gehäuses (12) Abstand aufweist und gegen eine Ringschulter (20) in der Mantelfläche (18) anliegt und wobei die Scheibe (26) gegen das der Seitenfläche des Gehäuses (12) abgelegene Ende der Mantelfläche (18) anliegt.

8. Säorgan nach einem oder mehreren der vorherigen Ansprüche, dadurch gekennzeichnet, daß jeder Auswahlfinger (30) an seinem der Scheibe (26) zugelegenen Ende (36) tassenförmig ausgebildet ist.

9. Säorgan nach einem oder mehreren der vorherigen Ansprüche, dadurch gekennzeichnet, daß jeder Auswahlfinger (30) an seinem der Seitenfläche des Gehäuses (12) zugelegenen Ende (34) mit einer Anschlagfläche (42) versehen ist, gegen die eine Feder (38) einenends anliegt, die anderenends gegen den Scheibenteil (24) anliegt.

10. Säorgan nach einem oder mehreren der vorherigen Ansprüche, dadurch gekennzeichnet, daß die Auswahlfinger (30) und die Saatzellen (52) auf Kreisen mit gleichem Durchmesser angeordnet sind und daß jedem Auswahlfinger (30) eine Saatzelle (52) zugeordnet ist.

## Claims

1. A seeder unit (10) with a seed receiving zone, a seed holding zone (68), a seed discharge zone (74) and selector fingers (30) rotating about an axis of rotation and which are forced in the longitudinal direction such that they effect reception of a single seed in the receiving zone, retain the received seed in the holding zone (68) and effect the emergence of the seed into an outlet (16) in the discharge zone, characterized in that the longitudinal axes of the selector fingers (30) are arranged coaxial with their axis of rotation.

2. A seeder unit according to claim 1, with a disc part (24) receiving the selector fingers (30), characterized in that a disc (26) rotating with the disc part (24) is provided spaced from the disc part (24) and in that the selector fingers (30) are so forcibly controlled that they are movable during their circulation towards and away from the disc (26).

3. A seeder unit according to claim 2, characterized in that the disc (26) is provided with seed cells (52) which are aligned with the selector fingers (30).

4. A seeder unit according to claim 3, characterized in that each seed cell (52) is covered by a flexible and yielding membrane (54).

5. A seeder unit according to one or more of the preceding claims, characterized in that the selector fingers (30) can be brought into abutment at their ends (34) remote from the disc (26) against a stationary cam surface (22) under spring action.

6. A seeder unit according to claim 5, with a housing (12) consisting at least of a peripheral surface (18) and a side surface, characterized in that the cam surface (22) is provided on the side surface of the housing (12) and is of rising, ramp-like form in the material receiving zone and of falling, ramp-like form in the material discharge zone (74).

7. A seeder unit according to one or more of the preceding claims, with a housing (12) consisting of at least a peripheral surface (18) and a side surface, characterized in that the disc part (24) and the disc (26) are arranged parallel to one another and fast against rotation on a drive shaft (28), wherein the disc part (24) is spaced from the side surface of the housing (12) and bears against an annular shoulder (20) in the peripheral surface (18), and wherein the disc (26) bears against the end of the peripheral surface (18) remote from the side surface of the housing (12).

8. A seeder unit according to one or more of the preceding claims, characterized in that each selector finger (30) is formed like a cup at its end (36) adjacent the disc (26).

9. A seeder unit according to one or more of the preceding claims, characterized in that each selector finger (30) is provided with an abutment surface (42) at its end (34) adjacent the side surface of the housing (12), a spring (38) bearing at one end against the abutment surface and at the other end against the disc part (24).

10. A seeder unit according to one or more of the preceding claims, characterized in that the selector fingers (30) and the seed cells (52) are arranged on circles with the same diameter and in that a seed cell (52) is associated with each selector finger (30).

## Revendications

1. Elément de semoir (10) comportant une zone de réception de la semence, une zone (68) de retenue de la semence, une zone (74) de délivrance de la semence et des doigts de sélection (30) qui circulent autour d'un axe de rotation et sont agencés de manière à être déplaçables de façon forcée dans la direction longitudinale de telle sorte qu'ils provoquent, dans la zone de réception, la réception d'un grain individuel de semence, retiennent le grain reçu de semence dans la zone de retenue (68) et provoquent, dans la zone de délivrance, l'évacuation de la graine de semence dans une sortie (16), caractérisé en ce que les axes longitudinaux des doigts de sélection (30) sont disposés coaxialement à l'axe de rotation de ces doigts.

2. Elément de semoir selon la revendication 1, comportant une partie en forme de disque (24), qui loge les doigts de sélection (30), caractérisé en ce qu'un disque (26), qui tourne conjointement avec la partie en forme de disque (24), est prévu à distance de cette partie en forme de disque (24) et que les doigts de sélection (30) sont commandés de façon forcée de telle sorte que pendant leur circulation sur le disque (26), ils peuvent être rapprochée et écartés de ce disque.

3. Elément de semoir selon la revendication 2, caractérisé en ce que le disque (26) comporte des cellules à semence (52), qui sont orientées vers les doigts de sélection (30).

4. Elément de semoir selon la revendication 3, caractérisé en ce que chaque cellule à semence (52) est recouverte par une membrane flexible et déformable (54).

5. Elément de semoir selon une ou plusieurs des revendications précédentes, caractérisé en ce que les doigts de sélection (30) peuvent être appliqués, sous l'action d'un ressort, au niveau de leurs extrémités (34) éloignées du disque (26), contre une surface fixe de came (22).

6. Elément de semoir selon la revendication 5, comportant un boitier (12) constitué par au moins une surface enveloppe (18) et une surface latérale, caractérisé en ce que la surface de came (22) est prévue sur la face latérale du boîtier (12) et est agencée de manière à remonter selon une disposition en rampe dans la zone de réception de la semence et de manière à s'abaisser selon une disposition en rampe dans la zone (74) de délivrance de la semence.

7. Elément de semoir selon une ou plusieurs des revendications précédentes, comportant un boîtier (12) constitué par au moins une surface enveloppe (18) et une surface latérale, caractérisé en ce que la partie en forme de disque (24) et le disque (26) sont parallèles entre eux et sont disposés solidairement en rotation sur un arbre d'entraînement (28), la partie en forme de disque (24) étant située à distance de la face latérale du boîtier (12) et s'appliquant contre un épaulement annulaire (20) formé dans la surface enveloppe (18), tandis que le disque (26) s'applique contre l'extrémité de la surface enveloppe (18), éloignée de la surface latérale du boîtier (12).

8. Elément de semoir selon un ou plusieurs des revendications précédentes, caractérisé en ce que l'extrémité (36) de chaque doigt de sélection (30), tournée vers le disque (26), est agencée en forme de coupelle.

9. Elément de semoir selon une ou plusieurs des revendications précédentes, caractérisé en ce que chaque doigt de sélection (30) comporte, sur son extrémité (34) tournée vers la surface latérale du boîtier (12), une surface de butée (42), contre laquelle un ressort (38) s'applique par une extrémité, tandis que son autre extrémité s'applique contre la partie en forme de disque (24).

10. Elément de semoir selon une ou plusieurs des revendications précédentes, caractérisé en ce que les doigts de sélection (30) et les cellules à semence (52) sont disposées sur des cercles de même diamètre et qu'une cellule à semence (52) est associée à chaque doigt de sélection (30).
